# EUROPEAN PATENT APPLICATION

(11) **EP 4 810 339 A1**
(43) Date of publication of application: **23.09.2026**
(21) Application number: 24890343.7
(22) Date of filing: 25.09.2024
(51) Int. Cl.: B60W 30/12, B60W 40/072

(54) **EXIT JUDGEMENT METHOD FOR LANE KEEPING ASSIST FUNCTION BASED ON CURVATURE OF CURVE**

(30) Priority: 17.11.2023 CN 202311555821
(71) Applicant: Dongfeng Motor Group Co., Ltd, Wuhan, Hubei 430056 (CN)
(72) Inventor: HE, Jiaorong, Wuhan, Hubei 430056 (CN); YU, Xiaoyang, Wuhan, Hubei 430056 (CN); XU, Ge, Wuhan, Hubei 430056 (CN); LI, Piao, Wuhan, Hubei 430056 (CN); ZHOU, Weiguang, Wuhan, Hubei 430056 (CN)
(74) Representative: Valet Patent Services Limited
(86) International application number: PCT/CN2024/120998
(87) International publication number: WO 2025/102985

(57) **Abstract**

An exit judgement method for a lane keeping assist function based on a curve curvature, comprising: calculating a timeout exit time threshold, a vehicle attitude stabilization time threshold, and a driver takeover torque threshold according to a curve curvature, the curve curvature being obtained from a driving image containing a lane line acquired by a vehicle-mounted sensing device; if any one of a timeout judgment condition, a stabilization judgment condition, and a driver takeover judgment condition is currently satisfied, exiting the lane keeping assist function; when an activation duration of the lane keeping assist function exceeds the timeout exit time threshold, the timeout judgment condition being satisfied; when the vehicle maintains a stable state for a duration which exceeds the vehicle attitude stabilization time threshold, the stabilization judgment condition being satisfied; when a driver steering torque exceeds the driver takeover torque threshold, the driver takeover judgment condition being satisfied.

## Description

### CROSS-REFERENCE TO RELATED APPLICATION

Embodiments of this application are based on a Chinese patent application No. 202311555821.7, filed on November 17, 2023 and the priority of this Chinese patent application is claimed, and the entire content of the Chinese patent application is hereby incorporated into this application as a reference.

### TECHNICAL FIELD

The invention relates to the technical field of assisted driving, and specifically to an exit judgement method for a lane keeping assist function based on a curve curvature.

### BACKGROUND

A lane keeping assist (LKA) function is a short-term intervention function. A system with LKA function intervenes only when a judgement condition of deviation of a vehicle is satisfied, and does not control the vehicle for a long time. When an exit control condition is satisfied, for example, when the vehicle has returned to a centered state and shows no tendency to deviate, the lane keeping assist function should automatically disengage and hand over a control right to a driver. Thus, a problem of when to switch the control right from the system to a driver is involved. A timing for the system to exit greatly affects a functional usage experience and safety, especially for a curve scenario. The greater the curve curvature is, the longer a control duration after activation of the lane keeping assist function should be, and an exit judgement mechanism should be more stringent. Otherwise, after the control right is released, the vehicle is likely to deviate from the lane again in the curve.

An existing technology provides a vehicle decision-making and control method and apparatus that balances both safety and stabilization, including: acquiring a road surface parameter of a current lane, a driving state parameter of a current vehicle, and a driving state parameter of an obstacle vehicle, wherein the obstacle vehicle is a vehicle driving in the current lane or a target lane; determining a lane change decision of the current vehicle according to the road surface parameter, the driving state parameter of the current vehicle, and the driving state parameter of the obstacle vehicle; and controlling, according to the lane change decision, the current vehicle to change to the target lane. The method makes the lane change decision based on the road surface parameter of the current lane and the driving state of the vehicle, providing a corresponding lane change decision under different road surface conditions, to avoid unsafe conditions such as vehicle sideslip, and improve a stabilization of a lane change process on the basis of ensuring vehicle safety.

A defect of the above existing technology lies in that: only a driver takeover is proposed as a condition for exiting a lateral assist function, while an exit condition for system control and an exit condition for vehicle attitude stabilization are not proposed. This would cause the lane keeping assist function to control the vehicle for a long time, failing to achieve a purpose of timely exiting after a necessary intervention and a correction completion of the lane keeping assist function to reduce an impact on driver driving. Moreover, an exit judgment condition proposed in existing technology is not associated with a curve situation, resulting in poor curve adaptability.

### SUMMARY

An objective of the invention is to provide an exit judgement method for a lane keeping assist function based on a curve curvature, so as to improve a usage experience of an assisted driving function.

To solve the above technical problem, the invention provides a technical solution: respectively establishing linear relationships between a curve curvature and a timeout exit time threshold, a vehicle attitude stabilization time threshold, and a driver takeover torque threshold, such that when the curve curvature is greater, the timeout exit time threshold, the vehicle attitude stabilization time threshold, and the driver takeover torque threshold increase accordingly; calculating the timeout exit time threshold, the vehicle attitude stabilization time threshold, and the driver takeover torque threshold according to the curve curvature;
exiting the lane keeping assist function, if any one of a timeout judgment condition, a stabilization judgment condition, and a driver takeover judgment condition is currently satisfied;
the timeout judgment condition is that: an activation duration of the lane keeping assist function exceeds the timeout exit time threshold; the stabilization judgment condition being: the vehicle maintains a stable state for a duration which exceeds the vehicle attitude stabilization time threshold,
the vehicle stable state being determined according to a lateral distance between the vehicle and a lane line and a deviation angle between a vehicle heading angle and a tangent line of the lane line;
the driver takeover judgment condition being: a driver steering torque exceeds the driver takeover torque threshold.

As a second aspect of the invention, the invention provides an exit judgement device for the lane keeping assist function, comprising a memory, a processor, and a computer program stored on the memory and executable on the processor, wherein the processor, when executing the computer program, implements the above-described exit judgement method for the lane keeping assist function based on the curve curvature.

As a third aspect of the invention, the invention provides a computer-readable storage medium, comprising a computer program stored thereon, wherein the computer program, when executed by a processor, implements the above-described exit judgement method for the lane keeping assist function based on the curve curvature.

As a fourth aspect of the invention, the invention provides a lane keeping assist system, comprising the above-described exit judgement device for the lane keeping assist function, and further comprising:
a vehicle-mounted sensing device, configured to acquire a driving image containing a lane line, and transmit the driving image to an image processing device;
the image processing device, configured to acquire a curve curvature in the driving image according to the driving image provided by the vehicle-mounted sensing device, and transmit the curve curvature to the exit judgement device for the lane keeping assist function;
a vehicle stable state judgement device, configured to judge whether the vehicle is in a stable state according to a lateral distance between the vehicle and the lane line and a deviation angle between a vehicle heading angle and a tangent line of the lane line, and transmit a vehicle stable state judgment result to the exit judgement device for the lane keeping assist function;
a driver steering torque acquisition device, configured to acquire a driver steering torque and transmit the driver steering torque to the exit judgement device for the lane keeping assist function;
a timing device, configured to acquire and transmit an activation duration of the lane keeping assist function and a duration for which the vehicle maintains the stable state, to the exit judgement device for the lane keeping assist function;
the exit judgement device for the lane keeping assist function judges whether to exit the lane keeping assist function according to received curve curvature, driver steering torque, vehicle stable state judgment result, activation duration of the lane keeping assist function, and duration for which the vehicle maintains the stable state.

As a fifth aspect of the invention, the invention provides an assisted driving system, comprising the above-described lane keeping assist system.

As a sixth aspect of the invention, the invention provides a vehicle, provided with the above-described assisted driving system.

### BRIEF DESCRIPTION OF DRAWINGS

FIG. 1 is a schematic diagram of vehicle stable state judgment parameters according to Embodiment 1 of the invention;
FIG. 2 is a schematic diagram of an exit judgement method for a lane keeping assist function based on a curve curvature according to Embodiment 1 of the invention.

### DETAILED DESCRIPTION

To make objectives, technical solutions, and advantages of embodiments of the invention clearer, the technical solutions of the embodiments of the invention will be described clearly and completely below with reference to the drawings of the embodiments of the invention. Obviously, the described embodiments are only some, not all the embodiments of the invention. Based on the described embodiments of the invention, all other embodiments obtained by those skilled in the art without creative efforts fall within the scope of protection of the invention.

### Embodiment 1:

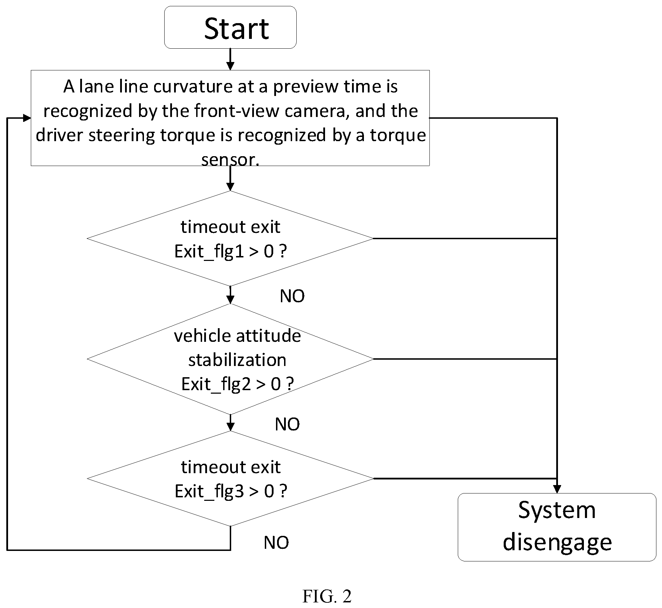

Referring to FIG. 2, an exit judgment method for a lane keeping assist function based on a curve curvature includes the following steps:

In S1: a timeout exit time threshold, a vehicle attitude stabilization time threshold, and a driver takeover torque threshold are calculated according to a curve curvature; the curve curvature is obtained (at a preview time) from a driving image containing a lane line acquired by a vehicle-mounted sensing device (a front-view camera); when the curve curvature is greater, the timeout exit time threshold, the vehicle attitude stabilization time threshold, and the driver takeover torque threshold increase accordingly.

A calculation process of the timeout exit time threshold T1 is as follows:
$T 1 = {T}_{0} + \frac{Crv}{{Crv}_{max}} ∗ {T}_{crv}$
where, T₀ is a preset timeout exit time threshold in a straight road, Crv is the curve curvature, Crvₘₐₓ is a maximum curve curvature supported by the assisted driving system, and T_{crv} is a preset curve superposition timeout exit time coefficient.

A calculation process of the vehicle attitude stabilization time threshold T2 is as follows:
$T 2 = {T}_{0} ′ + \frac{Crv}{{Crv}_{max}} ∗ {T}_{crv} ′$
where, T₀' is a preset vehicle attitude stabilization time threshold in a straight road, and T_{crv}' is a preset curve superposition vehicle attitude stabilization time coefficient.

A calculation process of the driver takeover torque threshold Trqₜₐₖₑₒᵥₑᵣ is as follows:
${Trq}_{takeover} = {Trq}_{takeover 0} + \frac{Crv}{{Crv}_{max}} ∗ {Trq}_{takeover_crv}$
where, Trqₜₐₖₑₒᵥₑᵣ₀ is a preset driver takeover torque threshold in a straight road, and Trq_{takeover_crv} is a preset curve superposition driver takeover torque coefficient.

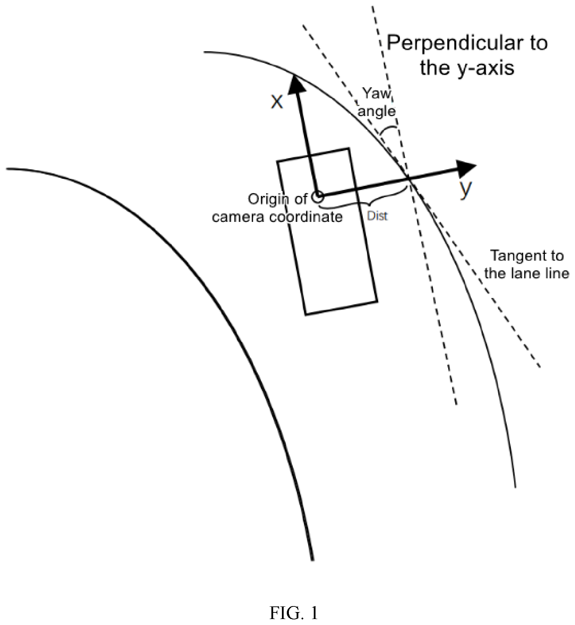

Referring to FIG. 1, an application scenario according to an embodiment of the invention is shown. When a vehicle is located in a curve with a certain curvature, a method for judging a stable state of the vehicle is as follows.
a lane width calculated value LaneWide is calculated:
   $LaneWide = min \left({LaneWide}_{max}, max \left({LaneWide}_{min}, {LaneWide}_{0}\right)\right)$
where, LaneWideₘₐₓ and LaneWideₘᵢₙ are a maximum lane width and a minimum lane width allowed by the lane keeping assist function, respectively, and LaneWide₀ is a lane width measurement value obtained from a driving image containing a lane line acquired by the vehicle-mounted sensing device.
a lateral distance threshold Dist' is calculated:
   $Dist ′ = \frac{{Dist}_{max} - {Dist}_{min}}{{LaneWide}_{max} - {LaneWide}_{min}} ⋅ LaneWide + {Dist}_{min}$
where, Distₘₐₓ and Distₘᵢₙ are a preset maximum value and minimum value of the lateral distance threshold, respectively.

When Δθ < Δθ' and Dist > Dist', it is determined that the vehicle is in a stable state; where Δθis a deviation angle, Dist is a lateral distance, Δθ' is a preset deviation angle threshold, and Dist' is the preset lateral distance threshold; a deviation angle is obtained from the driving image containing the lane line acquired by the vehicle-mounted sensing device.

The deviation angle Δθ and the lateral distance Dist are defined as follows.

An installation position of the vehicle-mounted sensing device for acquiring the driving image is taken as an origin, to establish a sensing coordinate system. In the sensing coordinate system, a vehicle traveling direction is taken as a positive direction of x-axis, a horizontal direction perpendicular to the x-axis and toward a right side of the vehicle is taken as a positive direction of y-axis, and a vertically upward direction is taken as a positive direction of z-axis; a distance from an intersection point of the y-axis and the lane line to the origin is the lateral distance Dist. A tangent line of the lane line is made at the intersection point of the y-axis and the lane line, and an included angle between the tangent line and the x-axis is the deviation angle Δθ.

S2: if any one of a timeout judgment condition, a stabilization judgment condition, and a driver takeover judgment condition is currently satisfied, and the lane keeping assist function is exited.

When an activation duration of the lane keeping assist function exceeds the timeout exit time threshold, the timeout judgment condition is satisfied (it is defined as Exit_flg1 > 0). The timeout judgment condition is set based on that: since the lane keeping assist function belongs to an L2-level intelligent driving, a vehicle control dominance lies with the driver, and thus a longest control time threshold should be set, and the lane keeping assist function should be exited after controlling for a period of time and should not control a steering wheel for a long time. A lane line curvature at a preview time is recognized by the front-view camera. The timeout exit time T1 varies with the curve curvature, and the timeout exit time threshold should increase as the curvature increases.

When the vehicle maintains a stable state for a duration which exceeds the vehicle attitude stabilization time threshold, the stabilization judgment condition is satisfied (it is defined as Exit_flg2 > 0). The stabilization judgment condition is set based on that: after the vehicle deviates toward one side of the lane and the lane keeping assist function is activated, the lane keeping assist function controls the steering to pull the vehicle back to a center of the lane, ensuring that the vehicle shows no tendency to deviate, and this state should be maintained for a period of time to avoid the vehicle from deviating from the lane again immediately after the control is released as much as possible. A time T2 to be maintained varies with the curve curvature, and should be appropriately extended as the curvature increases.

When a driver steering torque exceeds the driver takeover torque threshold, the driver takeover judgment condition is satisfied (it is defined as Exit_flg3 > 0). The takeover judgment condition is set based on: since a driver control takes priority in L2-level assisted driving, when it is recognized that the driver intends to take over the vehicle, the system should exit the control; the driver steering torque Trq is recognized by a torque sensor; when the driver steering torque Trq is greater than the driver takeover steering torque threshold, the system should exit; and a value of the driver takeover steering torque threshold should vary with the curve curvature, and should increase as the curvature increases.

The vehicle stable state is judged according to a lateral distance between the vehicle and the lane line and a deviation angle between a vehicle heading angle and a tangent line of the lane line.

### Embodiment 2:

A principle adopted in this embodiment is basically consistent with that of Embodiment 1. On the basis of Embodiment 1, this embodiment further proposes a lane keeping assist system, comprising an exit judgement device for the lane keeping assist function, the apparatus being configured to execute the exit judgement method for the lane keeping assist function based on the curve curvature as described in Embodiment 1, and further comprising:
a vehicle-mounted sensing device, configured to acquire a driving image containing a lane line, and transmit the driving image to an image processing device. The vehicle-mounted sensing device is a front-view camera or the like.

An image processing device, configured to acquire a curve curvature in the driving image according to the driving image provided by the vehicle-mounted sensing device, and transmit the curve curvature to the exit judgement device for the lane keeping assist function. When the curve curvature is greater, the timeout exit time threshold, the vehicle attitude stabilization time threshold, and the driver takeover torque threshold increase accordingly. Herein, a calculation of the curve curvature is a conventional technical means, mainly involving obtaining an image of the curve through image processing, and then calculating the curvature according to a geometric figure of the curve.

A vehicle stable state judgement device, configured to judge whether the vehicle is in a stable state according to a lateral distance between the vehicle and the lane line and a deviation angle between a vehicle heading angle and a tangent line of the lane line, and transmit a vehicle stable state judgment result to the exit judgement device for the lane keeping assist function.

Herein, a method for judging the stable state of the vehicle is as follows:
a lane width calculated value LaneWide is calculated:
   $LaneWide = min \left({LaneWide}_{max}, max \left({LaneWide}_{min}, {LaneWide}_{0}\right)\right)$
where, LaneWideₘₐₓ and LaneWideₘᵢₙ are a maximum lane width and a minimum lane width allowed by the lane keeping assist function, respectively, and LaneWide₀ is a lane width measurement value obtained from a driving image containing a lane line acquired by the vehicle-mounted sensing device.
calculating a lateral distance threshold Dist':
   $Dist ′ = \frac{{Dist}_{max} - {Dist}_{min}}{{LaneWide}_{max} - {LaneWide}_{min}} ⋅ LaneWide + {Dist}_{min}$
where, Distₘₐₓ and Distₘᵢₙ are a preset maximum value and a minimum value of the lateral distance threshold, respectively.

When Δθ < Δθ' and Dist > Dist', it is determined that the vehicle is in a stable state; where Δθ is a deviation angle, Distis a lateral distance, Δθ'is a preset deviation angle threshold, and Dist'is the preset lateral distance threshold; a deviation angle is obtained from the driving image containing the lane line acquired by the vehicle-mounted sensing device; The deviation angle Δθ and the lateral distance Dist are defined as follows.

An installation position of the vehicle-mounted sensing device for acquiring the driving image is taken as an origin, to establish a sensing coordinate system. In the sensing coordinate system, a vehicle traveling direction is taken as a positive direction of x-axis, a horizontal direction perpendicular to the x-axis and toward a right side of the vehicle is taken as a positive direction of y-axis, and a vertically upward direction is taken as a positive direction of z-axis; a distance from an intersection point of the y-axis and the lane line to the origin is the lateral distance Dist. A tangent line of the lane line is made at the intersection point of the y-axis with the lane line, and an included angle between the tangent line and the x-axis is the deviation angle Δθ.
a driver steering torque acquisition device, configured to acquire and transmit a driver steering torque to the exit judgement device for the lane keeping assist function.
a timing device, configured to acquire and transmit an activation duration of the lane keeping assist function and a duration for which the vehicle maintains the stable state, to the exit judgement device for the lane keeping assist function.

The exit judgement device for the lane keeping assist function judges whether to exit the lane keeping assist function according to received curve curvature, driver steering torque, vehicle stable state judgment result, activation duration of the lane keeping assist function, and duration for which the vehicle maintains the stable state.

Optionally, a calculation process of the timeout exit time threshold T1is as follows:
$T 1 = {T}_{0} + \frac{Crv}{{Crv}_{max}} ∗ {T}_{crv}$
where, T₀ is a preset timeout exit time threshold in a straight road, Crv is the curve curvature, Crvₘₐₓ is a maximum curve curvature supported by the assisted driving system, and T_{crv} is a preset curve superposition timeout exit time coefficient.

A calculation process of the vehicle attitude stabilization time threshold T2 is as follows:
$T 2 = {T}_{0} ′ + \frac{Crv}{{Crv}_{max}} ∗ {T}_{crv} ′$
where, T₀' is a preset vehicle attitude stabilization time threshold in a straight road, and T_{crv}' is a preset curve superposition vehicle attitude stabilization time coefficient.

A calculation process of the driver takeover torque threshold Trqₜₐₖₑₒᵥₑᵣ is as follows:

${Trq}_{takeover} = {Trq}_{takeover 0} + \frac{Crv}{{Crv}_{max}} ∗ {Trq}_{takeover_crv}$
where, Trqₜₐₖₑₒᵥₑᵣ₀ is a preset driver takeover torque threshold in a straight road, and Trq_{takeover_crv} is a preset curve superposition driver takeover torque coefficient.

The timeout judgment condition, the stabilization judgment condition, and the driver takeover judgment condition are preset; if any one of a timeout judgment condition, a stabilization judgment condition, and a driver takeover judgment condition is currently satisfied, exiting the lane keeping assist function.

When an activation duration of the lane keeping assist function exceeds the timeout exit time threshold, the timeout judgment condition is satisfied (it is defined as Exit_flg1 > 0). The timeout judgment condition is set based on that: since the lane keeping assist function belongs to an L2-level intelligent driving, a vehicle control dominance lies with the driver, and thus a longest control time threshold should be set, and the lane keeping assist function should be exited after controlling for a period of time, and should not control a steering wheel for a long time. A lane line curvature at a preview time is recognized by the front-view camera. The timeout exit time T1 varies with the curve curvature, and the timeout exit time threshold should increase as the curvature increases.

When the vehicle maintains a stable state for a duration which exceeds the vehicle attitude stabilization time threshold, the stabilization judgment condition is satisfied (it is defined as Exit_flg2 > 0). The stabilization judgment condition is set based on that: after the vehicle deviates toward one side of the lane and the lane keeping assist function is activated, the lane keeping assist function controls the steering to pull the vehicle back to a center of the lane, ensuring that the vehicle shows no tendency to deviate, and this state should be able to be maintained for a period of time to avoid the vehicle from deviating from the lane again immediately after the control is released as much as possible. A time T2 to be maintained varies with the curve curvature, and should be appropriately extended as the curvature increases.

When a driver steering torque exceeds the driver takeover torque threshold, the driver takeover judgment condition is satisfied (it is defined as Exit_flg3 > 0). The takeover judgment condition is set based on: since a driver control takes priority in L2-level assisted driving, when it is recognized that the driver intends to take over the vehicle, the system should exit the control; the driver steering torque Trq is recognized by a torque sensor; when the driver steering torque Trq is greater than the driver takeover steering torque threshold, the system should exit; and a value of the driver takeover steering torque threshold should vary with the curve curvature, and should increase as the curvature increases.

The vehicle stable state is judged according to a lateral distance between the vehicle and the lane line and a deviation angle between a vehicle heading angle and a tangent line of the lane line.

The above method and system are applicable to a vehicle controller, for the lane keeping assist function.

Based on the above system, the invention further provides an exit judgement device for the lane keeping assist function, comprising a memory, a processor, and a computer program stored on the memory and executable on the processor, wherein the processor, when executing the computer program, implements the above-described exit judgement method for the lane keeping assist function based on the curve curvature.

Based on the above system, the invention further provides a computer-readable storage medium, comprising a computer program stored thereon, wherein the computer program, when executed by a processor, implements the above-described exit judgement method for the lane keeping assist function based on the curve curvature.

Based on the above system, the invention further provides an assisted driving system, comprising the above-described lane keeping assist system.

The invention further provides a vehicle, provided with the above-described assisted driving system.

The above are only embodiments of the invention, which do not limit the patent scope of the invention. Any equivalent structure or equivalent process transformation made using the content of the specification and drawings of the invention, or directly or indirectly applied in other related technical fields, shall be similarly included in the patent protection scope of the invention.

## Claims

1. An exit judgement method for a lane keeping assist function based on a curve curvature, comprising:
respectively establishing linear relationships between a curve curvature, and a timeout exit time threshold, a vehicle attitude stabilization time threshold, and a driver takeover torque threshold, such that when the curve curvature is greater, the timeout exit time threshold, the vehicle attitude stabilization time threshold, and the driver takeover torque threshold increase accordingly; and calculating the timeout exit time threshold, the vehicle attitude stabilization time threshold, and the driver takeover torque threshold according to the curve curvature; and
exiting the lane keeping assist function, if any one of a timeout judgment condition, a stabilization judgment condition, and a driver takeover judgment condition is currently satisfied, wherein,
the timeout judgment condition is that an activation duration of the lane keeping assist function exceeds the timeout exit time threshold;
the stabilization judgment condition is that: the vehicle maintains a stable state for a duration which exceeds the vehicle attitude stabilization time threshold, the vehicle stable state being determined according to a lateral distance between the vehicle and a lane line and a deviation angle between a vehicle heading angle and a tangent line of the lane line; and
the driver takeover judgment condition is that: a driver steering torque exceeds the driver takeover torque threshold.

2. The exit judgement method for the lane keeping assist function based on the curve curvature according to claim 1, wherein a calculation process of the timeout exit time threshold T1 is: $T 1 = {T}_{0} + \frac{Crv}{{Crv}_{max}} ∗ {T}_{crv}$ where, T₀ is a preset timeout exit time threshold in a straight road, Crv is the curve curvature, Crvₘₐₓ is a maximum curve curvature supported by an assisted driving system, and T_{crv} is a preset curve superposition timeout exit time coefficient.

3. The exit judgement method for the lane keeping assist function based on the curve curvature according to claim 1, wherein: a calculation process of the vehicle attitude stabilization time threshold T2 is: $T 2 = {T}_{0} ′ + \frac{Crv}{{Crv}_{max}} ∗ {T}_{crv} ′$ where, T₀' is a preset vehicle attitude stabilization time threshold in a straight road, Crv is the curve curvature, Crvₘₐₓ is a maximum curve curvature supported by an assisted driving system, and T_{crv}' is a preset curve superposition vehicle attitude stabilization time coefficient.

4. The exit judgement method for the lane keeping assist function based on the curve curvature according to claim 1, wherein a calculation process of the driver takeover torque thresholdTrqₜₐₖₑₒᵥₑᵣ is: ${Trq}_{takeover} = {Trq}_{takeover 0} + \frac{Crv}{{Crv}_{max}} ∗ {Trq}_{takeover_crv}$ where, Trqₜₐₖₑₒᵥₑᵣ₀ is a preset driver takeover torque threshold in a straight road, Crv is the curve curvature, Crvₘₐₓ is a maximum curve curvature supported by an assisted driving system, and Trq_{takeover_crv} is a preset curve superposition driver takeover torque coefficient.

5. The exit judgement method for the lane keeping assist function based on the curve curvature according to claim 1, wherein a method for judging the stable state of the vehicle comprises:
calculating a lane width calculated value LaneWide: $LaneWide = min \left({LaneWide}_{max}, max \left({LaneWide}_{min}, {LaneWide}_{0}\right)\right)$
where, LaneWideₘₐₓ and LaneWideₘᵢₙ are a maximum lane width and a minimum lane width allowed by the lane keeping assist function, respectively, and LaneWide₀ is a lane width measurement value obtained from a driving image containing a lane line acquired by the vehicle-mounted sensing device;
calculating a lateral distance threshold Dist': $Dist ′ = \frac{{Dist}_{max} - {Dist}_{min}}{{LaneWide}_{max} - {LaneWide}_{min}} ⋅ LaneWide + {Dist}_{min}$
where, Distₘₐₓ and Distₘᵢₙ are a preset maximum value and a minimum value of the lateral distance threshold, respectively;
determining that the vehicle is in the stable state, when Δθ < Δθ'and Dist > Dist', where Δθ is a deviation angle, Dist is a lateral distance, Δθ' is a preset deviation angle threshold, and Dist' is the preset lateral distance threshold, wherein the deviation angle is obtained from the driving image containing the lane line acquired by the vehicle-mounted sensing device; and the deviation angle Δθ and the lateral distance Dist are defined as follows:
an installation position of the vehicle-mounted sensing device used for acquiring the driving image is taken as an origin, to establish a sensing coordinate system; in the sensing coordinate system, a vehicle traveling direction is taken as a positive direction of x-axis, a horizontal direction perpendicular to the x-axis and toward a right side of the vehicle is taken as a positive direction of y-axis, and a vertically upward direction is taken as a positive direction of z-axis; a distance from an intersection point of the y-axis and the lane line to the origin is the lateral distance Dist; a tangent line of the lane line is made at the intersection point of the y-axis and the lane line; and an included angle between the tangent line and the x-axis is the deviation angle Δθ.

6. An exit judgement device for a lane keeping assist function, comprising a memory, a processor, and a computer program stored on the memory and executable on the processor, wherein the processor, when executing the computer program, implements the exit judgement method for the lane keeping assist function based on the curve curvature according to any one of claims 1-5.

7. A computer-readable storage medium, comprising a computer program stored thereon, wherein the computer program, when executed by a processor, implements the exit judgement method for the lane keeping assist function based on the curve curvature according to any one of claims 1-5.

8. A lane keeping assist system, comprising the exit judgement device for the lane keeping assist function according to claim 6, and further comprising:
a vehicle-mounted sensing device, configured to acquire a driving image containing a lane line, and transmit the driving image to an image processing device;
the image processing device, configured to acquire a curve curvature in the driving image according to the driving image provided by the vehicle-mounted sensing device, and transmit the curve curvature to the exit judgement device for the lane keeping assist function;
a vehicle stable state judgement device, configured to judge whether the vehicle is in a stable state according to a lateral distance between the vehicle and the lane line and a deviation angle between a vehicle heading angle and a tangent line of the lane line, and transmit a vehicle stable state judgment result to the exit judgement device for the lane keeping assist function;
a driver steering torque acquisition device, configured to acquire a driver steering torque and transmit the driver steering torque to the exit judgement device for the lane keeping assist function; and
a timing device, configured to acquire and transmit an activation duration of the lane keeping assist function and a duration for which the vehicle maintains the stable state, to the exit judgement device for the lane keeping assist function;
wherein the exit judgement device for the lane keeping assist function judges whether to exit the lane keeping assist function according to received curve curvature, driver steering torque, vehicle stable state judgment result, activation duration of the lane keeping assist function, and duration for which the vehicle maintains the stable state.

9. An assisted driving system, comprising the lane keeping assist system according to claim 8.

10. A vehicle, provided with the assisted driving system according to claim 9.
